**Europäisches Patentamt**

**European Patent Office**

**Office européen des brevets**

(19)

(11) Veröffentlichungsnummer : **0 519 228 B1**

(12) # EUROPÄISCHE PATENTSCHRIFT

(45) Veröffentlichungstag der Patentschrift :
**22.11.95 Patentblatt 95/47**

(51) Int. Cl.⁶ : **H01B 9/06,** H02B 13/045

(21) Anmeldenummer : **92108649.2**

(22) Anmeldetag : **22.05.92**

(54) **Hochspannungskapselung mit mindestens zwei Schutzbelägen.**

(30) Priorität : **20.06.91 DE 4120309**

(43) Veröffentlichungstag der Anmeldung :
**23.12.92 Patentblatt 92/52**

(45) Bekanntmachung des Hinweises auf die
Patenterteilung :
**22.11.95 Patentblatt 95/47**

(84) Benannte Vertragsstaaten :
**CH DE FR GB IT LI**

(56) Entgegenhaltungen :
**CH-A- 570 720
DE-A- 3 112 022
US-A- 4 564 721
US-A- 4 667 061**

(73) Patentinhaber : **ASEA BROWN BOVERI AG
Haselstrasse 16
CH-5401 Baden (CH)**

(72) Erfinder : **Dunz, Thomas, Dr.
Badenerstrasse 20
CH-5413 Birmenstorf (CH)**

EP 0 519 228 B1

**Beschreibung**

TECHNISCHES GEBIET

Die Erfindung geht aus von einer Hochspannungsanlage gemäss dem Oberbegriff des Anspruchs 1.

STAND DER TECHNIK

Es sind Hochspannungsanlagen bekannt, die eine geerdete, mit Isoliergas gefüllte, metallische Kapselung aufweisen, deren innere, den hochspannungsbeaufschlagten Aktivteilen gegenüberliegende Oberfläche, mit einem Schutzbelag versehen ist. Dieser Schutzbelag soll diese Oberfläche glatt machen, damit sie gereinigt werden kann, ohne dass Fasern oder sonstige Rückstände von Reinigungshilfen durch Oberflächenrauhigkeiten der inneren Oberfläche zurückgehalten werden, wodurch die dielektrische Festigkeit der Gasisolierstrecke reduziert würde. Die Oberfläche der Aktivteile wird bei derartigen Anlagen häufig mit einem gleichartigen Schutzbelag versehen.

In derartigen Hochspannungsanlagen verbleiben stets, trotz aller Sorgfalt bei der Montage, elektrisch leitfähige Partikel. Zudem können leitfähige Partikel infolge von Abrieb an bewegten Kontaktstellen oder aus Schaltrückständen entstehen. Diese Partikel sind in der Regel innerhalb der Kapselung frei beweglich und sie können sich an bestimmten Stellen so anlagern, dass die dielektrische Festigkeit der Isoliergasstrecken reduziert wird.

Die Patentschrift US-PS 4,564,721 gibt einen Schutzbelag an, der dauerhaft mit einer elektrischen Ladung beaufschlagt ist. Dieser Schutzbelag kann auch aus mehreren, entsprechend ausgebildeten Schichten aufgebaut sein. An diesem Schutzbelag lagern sich frei bewegliche Partikel zumindest teilweise ab.

DARSTELLUNG DER ERFINDUNG

Die Erfindung, wie sie in den Ansprüchen gekennzeichnet ist, löst die Aufgabe, eine Hochspannungsanlage zu schaffen, bei welcher neben den frei beweglichen Partikeln auch die stets in den Metalloberflächen auftretenden Spitzen dielektrisch unwirksam gemacht werden.

Die durch die Erfindung erreichten Vorteile sind im wesentlichen darin zu sehen, dass leitende Partikel, die stets im Inneren der Hochspannungsanlage vorhanden sind, durch einen speziell ausgebildeten Schutzbelag so festgehalten werden, dass sie sich nicht zur einer die Isolation gefährdenden Brücke aneinanderlegen können. Eine Reduzierung der dielektrischen Festigkeit der Isoliergasstrecken wird dadurch vorteilhaft vermieden. Ferner wirkt es sich vorteilhaft aus, dass auch der negative Einfluss der in den Metalloberflächen stets vorhandenen Spitzen zumindest im Bereich der Schutzbeläge entfällt.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen Ausführungsweg darstellt, näher erläutert.

KURZE BESCHREIBUNG DER ZEICHNUNG

Es zeigen:
Fig.1     einen Teilschnitt durch die erfindungsgemässe Hochspannungsanlage,
Fig.2     eine erste Ausführungsform der erfindungsgemässen Hochspannungsanlage,
Fig.3     eine zweite Ausführungsform der erfindungsgemässen Hochspannungsanlage, und
Fig.4     einen schematischen Schnitt durch eine Partikelfalle.
Bei allen Figuren sind gleich wirkende Elemente mit gleichen Bezugszeichen versehen.

WEGE ZUR AUSFÜHRUNG DER ERFINDUNG

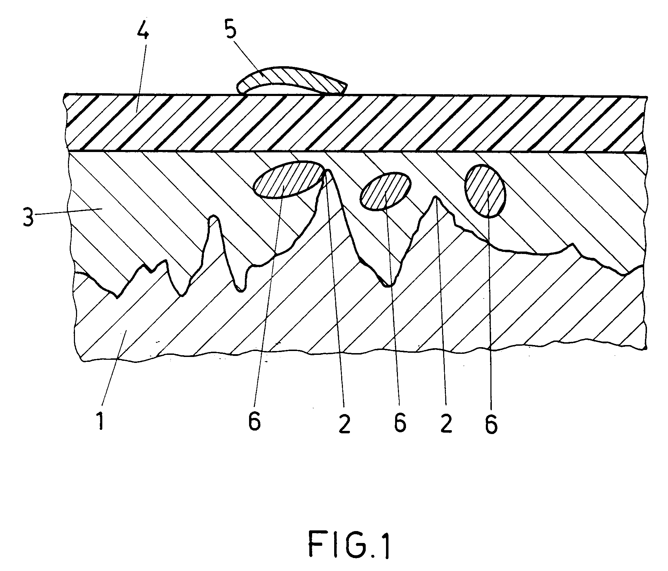

In der Figur 1 ist ein stark vergrösserter Teilschnitt durch die erfindungsgemässe Hochspannungsanlage dargestellt. Eine metallische Wand 1 weist an der Oberfläche Spitzen 2 und sonstige Unebenheiten auf. Ein erster Schutzbelag 3 bedeckt die Oberfläche der Wand 1 und nivelliert die Unebenheiten aus, sodass keine der Spitzen 2 diesen Schutzbelag durchbricht. Der Schutzbelag 3 ist von einem zweiten Schutzbelag 4 überzogen, wobei der Schutzbelag 4 entweder direkt auf den Schutzbelag 3 aufgetragen worden ist oder innig mit ihm verbunden ist, beispielsweise mit Hilfe elektrostatischer Kräfte. An den Schutzbelag 4 sind elektrisch leitende Partikel 5 angelagert, von denen nur eines dargestellt ist. Oberhalb des Schutzbelages 4 schliesst sich der isoliergasgefüllte Innenraum der Hochspannungsanlage an. Die Wand 1 kann demnach entweder als Teil einer Kapselung der Hochspannungsanlage oder als Teil von deren Aktivteilen angesehen werden. Es ist jedoch auch möglich auf eine Beschichtung der Aktivteile mit dem Schutzbelag 4 zu verzichten.

Der erste Schutzbelag 3 weist eine vergleichsweise hohe elektrische Leitfähigkeit auf oder eine grosse Dielektrizitätskonstante $\varepsilon_1$, die vorteilhaft im Bereich um 30 herum liegt. Dies wird dadurch erreicht, dass Partikel 6 in das Grundmaterial für den ersten Schutzbelag 3, beispielsweise einen Epoxidlack, eingebracht werden. Die Partikel 6 können beispielsweise aus $TiO_2$-Komponenten oder leitfähig beschichtetem $Al_2O_3$ oder aus einer Mischung beider Stoffe bestehen. Es sind auch noch andere elektrisch leitfähige Stoffe denkbar für diese Einbringung. Durch den leitenden Schutzbelag 3 wird die Oberfläche des beschichteten Teiles einer als dielektrisch glatt wirkenden Oberfläche angenähert. Die Spitzen 2 sind dielektrisch nicht mehr schädlich wirksam, da sie innerhalb des elektrisch leitenden oder dielektrisch aktiven Schutzbelages 3 liegen.

Der zweite Schutzbelag 4 dagegen wirkt elektrisch isolierend, d.h. er weist gegenüber dem Schutzbelag 3 eine vergleichsweise kleine Dielektrizitätskonstante $\varepsilon_2$ auf. Derartige Schutzbeläge 4 lassen sich auf der Basis von Polyäthylen herstellen. Es ist auch möglich hierfür geschäumtes Material auf der Basis von Polyäthylen einzusetzen. Zudem kann der Schutzbelag 4 als elektrostatisch am Schutzbelag 3 haftende Folie ausgebildet sein, die bei Bedarf entfernt werden kann. Der zweite Schutzbelag 4 kann, ebenso wie der erste Schutzbelag 3, auch mehrschichtig aufgebaut sein, wenn dielektrische Randbedingungen oder die Verarbeitbarkeit des Materials für diesen Schutzbelag 4 dies erforderlich machen sollten. Der zweite Schutzbelag 4 weist in der Regel eine Dielektrizitätskonstante $\varepsilon_2$ im Bereich von 1 bis 2 auf.

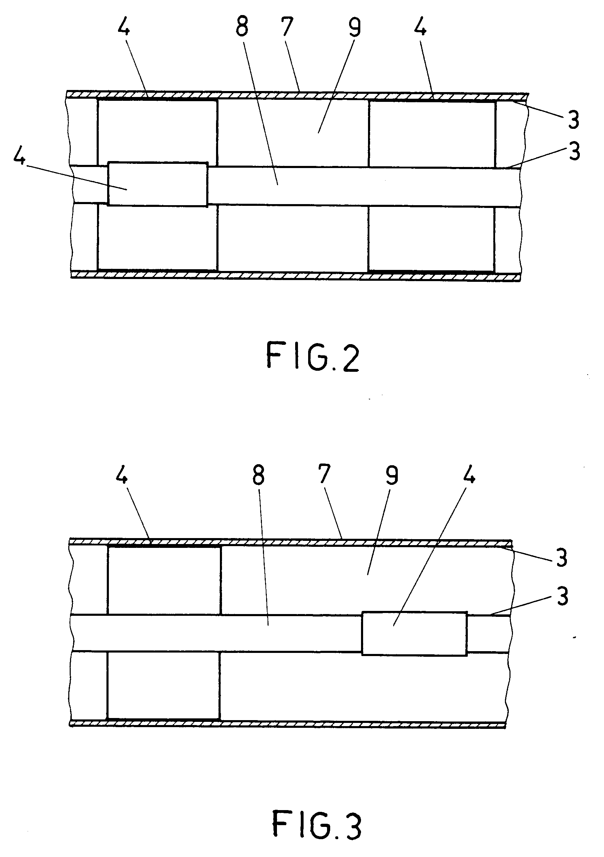

Fig. 2 zeigt einen Schnitt durch eine zylindrisch ausgebildete Hochspannungsanlage mit einer metallischen Kapselung 7, einem Aktivteil 8 und einem mit Isoliergas gefüllten Innenraum 9. Die innere Oberfläche der Kapselung 7 und die äussere Oberfläche des Aktivteils 8 sind mit dem ersten Schutzbelag 3 versehen. Es ist möglich die gesamte innere Oberfläche der Kapselung 7 und auch die gesamte Oberfläche des Aktivteils 8 mit der zweiten Schutzschicht 4 zu überziehen. Es ist jedoch auch sinnvoll, wie im linken Teil der Fig. 2 angedeutet, nur in einem Bereich oder in mehreren Bereichen der Hochspannungsanlage die Schutzschicht 4 vorzusehen, und zwar auf dem Aktivteil 8 und gegenüber innen an der Kapselung 7. Für manche Anwendungen genügt es jedoch auch, wie im rechten Teil der Fig. 2 angedeutet, lediglich die innere Oberfläche der Kapselung 7 mit der zweiten Schutzschicht 4 zu versehen, und zwar kann dies in einem oder mehreren Bereichen der Hochspannungsanlage erfolgen. Es ist jedoch auch möglich die gesamte innere Oberfläche der Kapselung 7 mit dem Schutzbelag 4 zu versehen.

Fig. 3 zeigt eine weitere Möglichkeit der Anbringung von Schutzbelägen 4 in der Hochspannungsanlage. Bei dieser Ausführung sind die Schutzbeläge 4 nämlich versetzt zueinander angebracht. Derartige Ausführungen können mehrfach in der Hochspannungsanlage vorgesehen werden. Zudem ist es möglich, die Ausführungen gemäss der Fig. 2 und 3 miteinander zu kombinieren, um so eine optimale Verteilung der Schutzbeläge 4 entsprechend den Anforderungen der jeweiligen Hochspannungsanlage zu erreichen.

Für Hochspannungsanlagen, bei denen mit einer besonders grossen Menge von leitenden Partikeln 5 gerechnet werden muss, kann es auch zweckmässig sein, die Kapselung 7 in dem Bereich wo Schutzbeläge 4 vorgesehen sind etwas aufzuweiten, wobei dies mit einer entsprechenden Verjüngung des Aktivteils 7 verknüpft werden kann.

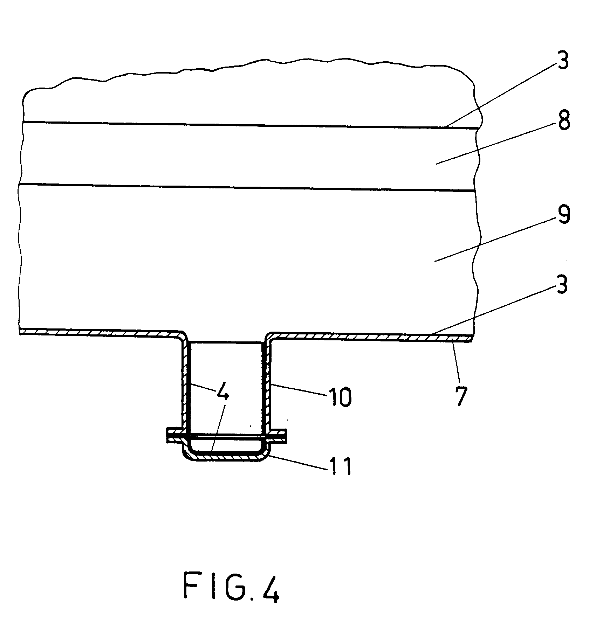

Fig. 4 zeigt eine Hochspannungsanlage mit einem im unteren Bereich der Kapselung 7 angebrachten Stutzen 10, der durch einen Deckel 11 gasdicht verschlossen ist. Bei dieser Ausführung ist die Innenwand des Stutzens 10 und die Innenwand des Deckels 11 mit dem zweiten Schutzbelag 4 versehen. Diese Ausführung ist als Partikelfalle vorgesehen.

Zur Erläuterung der Wirkungsweise sei nun die Fig. 1 etwas näher betrachtet. Der erste Schutzbelag 3 reduziert die lokale rauhigkeitsbedingte maximale Feldstärke im Innenraum 9 sehr vorteilhaft auf vertretbare Werte. Der zweite Schutzbelag 4 hat die Aufgabe, das sogenannte Lifting-Feld zu erhöhen, d.h. die Feldstärke, die nötig ist, um die freien, elektrisch leitenden Partikel 5 zum Abheben zu bringen. Das makroskopische Lifting-Feld $E_0$ kann aus der kapazitiven Ankopplung des Partikels 5 an die jeweilige Unterlage, hier als Wand 1 bezeichnet, abgeschätzt werden. Es gilt die folgende Beziehung:

$$E_0 \approx \sqrt{\rho} \cdot C'^{(-0,3)}$$

Dabei ist $E_0$ die Lifting-Feldstärke, $\rho$ ist die Dichte des Partikels 5, $C'$ ist der flächenbezogene mittlere Kapazitätsbelag der in Reihe geschalteten Schutzbeläge 3 und 4 in Bezug auf die rauhe Oberfläche der Wand 1.

Unter der Annahme, dass der Schutzbelag 3 stark kapazitiv wirkt und gut leitfähig ist, kann die kapazitive Ankopplung des Partikels 5 abgeschätzt werden nach folgender Beziehung:

$$E_0 \cong 2{,}25 \cdot 10^6 \ V \cdot m^{0,2} \ kg^{-0,5} \ \sqrt{\rho} \cdot (d/\varepsilon_2)^{0,3}$$

Dabei ist $E_0$ die Feldstärke, bei der ein Abheben des Partikels 5 gerade eben noch nicht erfolgt, $\rho$ ist die Dichte des Partikels 5, d ist die Dicke des zweiten Schutzbelags 4, $\varepsilon_2$ ist die Dielektrizitätskonstante des Schutzbelags 4.

Nach der zuletzt stehenden Beziehung ergibt sich für ein Parikel 5 aus Aluminium mit $\rho = 2{,}7 \cdot 10^3$ kg/m³, mit einer Dicke d = 40 μm des Schutzbelags 4 und mit einer Dielektrizitätskonstanten $\varepsilon_2 = 1{,}5$ des Schutzbelags 4 eine Lifting Feldstärke $E_0 = 50$ kV/cm als Schätzwert. Dieser Wert von $E_0$ liegt bereits in einem Bereich, der in der Regel in üblichen Hochspannungsanlagen nicht überschritten wird, sodass durch diese einfachen Massnahmen die Betriebssicherheit dieser Anlage vorteilhaft erhöht werden kann.

Um auch schon bei einer geringen Dicke d des zweiten Schutzbelages 4 eine möglichst hohe Lifting-Feldstärke $E_0$ zu erreichen, muss demnach das Material des Schutzbelages 4 eine möglichst kleine Dielektrizitätskonstante $\varepsilon_2$ aufweisen. Auf diese Art kann mit einfachen Mitteln und geringem Materialaufwand die Verfügbarkeit der Hochspannungsanlage erhöht werden.

Die Partikel 5 werden auf dem Schutzbelag 4 festgehalten und können nicht in der Anlage weiterwandern, sodass keine Anhäufung von Partikeln auftreten kann, die eventuell zu Isolationsdurchschlägen führen könnte. Der Schutzbelag 4 wird nun stets an solchen Stellen vorgesehen, wo die Partikel 5, ohne die Isolationsfestigkeit nennenswert zu reduzieren, festgehalten werden können. Eine Anhäufung von leitenden Partikeln 5, die zu Isolationsdurchschlägen führen könnte, ist in dieser Anlage nicht möglich. Ferner kann auf diese Art auch eine Anlagerung von leitenden Partikeln 5 auf Feststoffisolationen sicher vermieden werden.

Die Schutzbeläge 4 werden vorteilhaft in solchen Bereichen der Hochspannungsanlage angebracht, die dielektrisch weniger belastet sind als die übrigen Bereiche der Anlage. Die örtliche Verstärkung der dielektrischen Belastung infolge der dielektrisch als Spitzen wirkenden, angelagerten Partikel 5, wirkt sich in diesen sonst dielektrisch weniger belasteten Bereichen nicht so stark aus. Eine Gefährdung der Anlage durch diese gezielt festgehaltenen Partikel 5 wird so mit grosser Sicherheit vermieden.

Ebenso wirkt es sich vorteilhaft aus, wenn der zweite Schutzbelag 4 auf der inneren Oberfläche der Kapselung in einem anderen Bereich angeordnet ist wie der entsprechende zweite Schutzbelag 4 auf der äusseren Oberfläche des Aktivteils 8, da sich in diesem Fall die Feldstörungen durch die angelagerten Partikel 5 nicht an der gleichen Stelle überlagern und so die dielektrische Festigkeit nicht unzulässig herabsetzen können.

Die Anordnung des zweiten Schutzbelages 4 in der Nähe von Montageöffnungen in der Kapselung 7 oder in bei Revisionen zugänglichen Bereichen der Anlage ist deshalb zweckmässig, da so der Schutzbelag 4 einfach und ohne zusätzlichen Montageaufwand von den angelagerten Partikeln 5 befreit werden kann. Es scheint auch sinnvoll zu sein, den zweiten Schutzbelag 4 speziell einzufärben, um so die zu reinigenden Zonen besser sichtbar zu machen. Wird dagegen die gesamte Anlage mit einem Schutzbelag 4 überzogen, was bei bestimmten Anlagekonfigurationen durchaus möglich ist, so erübrigt sich diese spezielle Farbgebung.

Es ist auch möglich, nur die innere Oberfläche der Kapselung 7 vollständig mit einem Schutzbelag 4 zu versehen, da dort eine besonders gute Anlagerung von Partikeln 5 zu erwarten ist.

Besonders vorteilhaft ist es, Partikelfallen in Hochspannungsanlagen mit Schutzbelägen 4 zu versehen, um so ein sicheres Verbleiben der Partikel 5 in diesen Fallen zu erreichen. Mit vergleichsweise wenig Aufwand lassen sich Partikelfallen in bereits bestehenden Anlagen durch neu eingebrachte Schutzbeläge 3 und 4 aufwerten, um so eine grössere Betriebssicherheit der Hochspannungsanlage zu erreichen.

Wird der zweite Schutzbelag 4 als entfernbare Folie, die elektrostatisch am Schutzbelag 3 haftet, ausgebildet, so kann diese Folie mitsamt den angelagerten Partikeln 5 entfernt werden. Besonders bei Inbetriebsetzungen wäre eine derartige Möglichkeit vorteilhaft, wenn beispielsweise nach einem Probebetrieb der Anlage diese Folie mit der Mehrheit aller loser Partikel 5 entfernt werden könnte. In diesem Fall wäre es zweckmässig mindestens eine zweite Schicht des zweiten Schutzbelages 4 vorzusehen, die nach dem Entfernen der Folie wirksam wird. Die kapazitive Kopplung zwischen der Folie, der zweiTen Schicht des Schutzbelages 4 und dem Schutzbelag 3 lässt sich so auslegen, dass ein optimaler Schutz gegen frei bewegliche Partikel 5 erreicht wird. Es wird aber auch möglich, hier auf eine zweite Schicht des zweiten Schutzbelages 4 zu verzichten.

## Patentansprüche

1. Hochspannungsanlage mit einer isoliergasgefüllten metallischen Kapselung (7), die spannungsbeaufschlagte Aktivteile (8) umgibt, mit mindestens einem Schutzbelag (3,4) sowohl auf der inneren Oberfläche der Kapselung (7) als auch auf der äusseren Oberfläche der Aktivteile (8), dadurch gekennzeichnet,
   - dass ein erster Schutzbelag (3) elektrisch leitend ausgebildet ist oder eine hohe Dielektrizitätskonstante aufweist,
   - dass der erste Schutzbelag (3) zumindest teilweise mit mindestens einem zweiten Schutzbelag (4) überzogen ist, und
   - dass der mindestens eine zweite Schutzbelag (4) eine kleinere Dielektrizitätskonstante aufweist als der erste Schutzbelag (3).

2. Hochspannungsanlage nach Anspruch 1, dadurch gekennzeichnet,
   - dass der erste Schutzbelag (3) aus einem Epoxidlack mit beigemischten, elektrisch leitfähigen oder dielektrisch aktiven Partikeln (6) besteht, und
   - dass der zweite Schutzbelag (4) aus Lack auf der Basis von Polyäthylen besteht.

3. Hochspannungsanlage nach Anspruch 1, dadurch gekennzeichnet,
   - dass der zweite Schutzbelag (4) aus einem geschäumten Material auf der Basis von Polyäthylen besteht.

4. Hochspannungsanlage nach Anspruch 2, dadurch gekennzeichnet,
   - dass als beigemischte leitfähige oder dielektrisch aktive Partikel (6) $TiO_2$-Komponenten oder leitfähig beschichtetes $Al_2O_3$ oder eine Mischung beider Stoffarten verwendet werden.

5. Hochspannungsanlage nach einem der voranstehenden Ansprüche, dadurch gekennzeichnet,
   - dass der mindestens eine zweite Schutzbelag (4) in Bereichen der Hochspannungsanlage vorgesehen ist, die dielektrisch weniger belastet sind als deren übrige Bereiche.

6. Hochspannungsanlage nach Anspruch 5, dadurch gekennzeichnet,
   - dass der mindestens eine zweite Schutzbelag (4) auf der inneren Oberfläche der Kapselung (7) in einem anderen Bereich der Anlage angeordnet ist wie der entsprechende zweite Schutzbelag (4) auf der äusseren Oberfläche des Aktivteils (8).

7. Hochspannungsanlage nach einem der voranstehenden Ansprüche, dadurch gekennzeichnet,
   - dass der mindestens eine zweite Schutzbelag (4) in der Nähe von Montageöffnungen in der Kapselung (7) oder in bei Revisionen zugänglichen Bereichen der Anlage vorgesehen ist.

8. Hochspannungsanlage nach einem der Ansprüche 1 bis 4, dadurch gekennzeichnet,
   - dass der erste Schutzbelag (3) vollständig mit dem mindestens einen zweiten Schutzbelag (4) überzogen ist.

9. Hochspannungsanlage nach einem der Ansprüche 1 bis 4, dadurch gekennzeichnet,
   - dass der erste Schutzbelag (3) entweder auf der inneren Oberfläche der Kapselung (7) oder auf der äusseren Oberfläche des Aktivteils (8) vollständig mit dem mindestens einen zweiten Schutzbelag (4) überzogen ist.

10. Hochspannungsanlage nach Anspruch 5, dadurch gekennzeichnet,
   - dass der mindestens eine zweite Schutzbelag (4) in einer Partikelfalle vorgesehen ist.

11. Hochspannungsanlage nach Anspruch 1, dadurch gekennzeichnet,
   - dass der mindestens eine zweite Schutzbelag (4) als elektrostatisch an dem ersten Schutzbelag (3) oder an einer zweiten Schicht des zweiten Schutzbelags (4) haftende, entfernbare Folie ausgebildet ist.

## Claims

1. High-voltage system having a metallic encapsulation (7) which is filled with an insulating gas and which surrounds the active parts (8) to which voltage is applied, having at least one protective coating (3,4) both on the internal surface of the encapsulation (7) and on the external surface of the active parts (8), characterized in that
   - a first protective coating (3) is of electrically conducting construction or has a high permittivity,
   - the first protective coating (3) is at least partially covered with at least one second protective coating (4), and
   - the at least one second protective coating (4) has a lower permittivity than the first protective coating (3).

2. High-voltage system according to Claim 1, characterized in that
   - the first protective coating (3) consists of an epoxy lacquer containing added, electrically conductive or dielectrically active particles (6), and
   - the second protective coating (4) consists of lacquer based on polyethylene.

3. High-voltage system according to Claim 1, characterized in that
   - the second protective coating (4) consists of a foamed material based on polyethylene.

4. High-voltage system according to Claim 2, characterized in that
   - $TiO_2$ components or conductively coated $Al_2O_3$ or a mixture of the two types of substance are used as added conductive or dielectrically active particles (6).

5. High-voltage system according to any of the preceding claims, characterized in that
   - the at least one second protective coating (4) is provided in regions of the high-voltage system which are dielectrically less stressed than its other regions.

6. High-voltage system according to Claim 5, characterized in that
   - the at least one second protective coating (4) is applied to the internal surface of the encapsulation (7) in a region of the system other than the corresponding second protective coating (4) on the external surface of the active part (8).

7. High-voltage system according to any of the preceding claims, characterized in that
   - the at least one second protective coating (4) is provided in the vicinity of assembly openings in the encapsulation (7) or in regions of the system which are accessible during inspections.

8. High-voltage system according to any of Claims 1 to 4, characterized in that
   - the first protective coating (3) is completely covered with the at least one second protective coating (4).

9. High-voltage system according to any of Claims 1 to 4, characterized in that
   - the first protective coating (3) either on the internal surface of the encapsulation (7) or on the external surface of the active part (8) is completely covered with the at least one second protective coating (4).

10. High-voltage system according to Claim 5, characterized in that
    - the at least one second protective coating (4) is provided in a particle trap.

11. High-voltage system according to Claim 1, characterized in that
    - the at least one second protective coating (4) is formed as a removable sheet which adheres electrostatically to the first protective coating (3) or to a second layer of the second protective coating (4).

**Revendications**

1. Équipement à haute tension avec une capsule métallique (7) remplie de gaz isolant, laquelle entoure des parties actives (8) exposées à une tension, avec au moins une couche de protection (3, 4) aussi bien sur la surface intérieure de la capsule (7) que sur la surface extérieure des parties actives (8), caractérisé par le fait
   - qu'une première couche de protection (3) est conductrice d'électricité ou présente une constante diélectrique élevée,
   - que la première couche de protection (3) est recouverte au moins en partie avec au moins une deuxième couche de protection (4), et
   - qu'au moins une deuxième couche de protection (4) présente une constante diélectrique inférieure à celle de la première couche de protection (3).

2. Équipement à haute tension conforme à la revendication 1, caractérisé par le fait
   - que la première couche de protection (3) est composée d'un vernis époxy mélangé avec des particules (6) conductrices d'électricité ou diélectriquement actives, et
   - que la deuxième couche de protection (4) est composée de vernis à base de polyéthylène.

3.  Équipement à haute tension conforme à la revendication 1, caractérisé par le fait
    - que la deuxième couche de protection (4) est composée d'un matériau moussé à base de polyéthylène.

4.  Équipement à haute tension conforme à la revendication 2, caractérisé par le fait
    - que ce sont des composants $TiO_2$ ou de $Al_2O_3$ enduit d'un conducteur, ou un mélange des deux types de matériaux, qui sont utilisés pour les particules (6) conductrices ou diélectriquement actives mélangées.

5.  Équipement à haute tension conforme à l'une des revendications précédentes, caractérisé par le fait
    - qu'au moins une couche de protection (4) est appliquée dans les zones de l'équipement à haute tension qui sont moins chargées diélectriquement que les zones restantes.

6.  Équipement à haute tension conforme à la revendication 5, caractérisé par le fait
    - qu'au moins une deuxième couche de protection (4) est appliquée sur la surface intérieure de la capsule (7) dans une zone de l'équipement différente que la deuxième couche de protection (4) correspondante sur la surface extérieure de la partie active (8).

7.  Équipement à haute tension conforme à l'une des revendications précédentes, caractérisé par le fait
    - qu'au moins une couche de protection (4) est appliquée à proximité des orifices de montage dans la capsule (7) ou dans les zones accessibles de l'équipement en cas de révision.

8.  Équipement à haute tension conforme à l'une des revendications 1 à 4, caractérisé par le fait
    - que la première couche de protection (3) est entièrement recouverte avec au moins une deuxième couche de protection (4).

9.  Équipement à haute tension conforme à l'une des revendications 1 à 4, caractérisé par le fait
    - que la première couche de protection (3) est entièrement recouverte avec au moins une deuxième couche de protection (4) soit sur la surface intérieure de la capsule (7), soit sur la surface extérieure de la partie active (8).

10. Équipement à haute tension conforme à la revendication 5, caractérisé par le fait
    - qu'au moins une deuxième couche de protection (4) est appliquée dans un piège à particules.

11. Équipement à haute tension conforme à la revendication 1, caractérisé par le fait
    - qu'au moins une deuxième couche de protection (4) est formée par un film amovible adhérant par effet électrostatique sur la première couche de protection (3) ou sur une deuxième couche de la deuxième couche de protection (4).

FIG.1

FIG.2

FIG.3

FIG.4